# EUROPEAN PATENT APPLICATION

(11) **EP 0 795 792 A1**
(43) Date of publication of application: **17.09.1997**
(21) Application number: 96200690.4
(22) Date of filing: 14.03.1996
(51) Int. Cl.: G03G 15/00, H04N 1/29, H04N 1/40

(54) **An image pre-processor in a device for direct electrostatic printing**

(71) Applicant: AGFA-GEVAERT naamloze vennootschap, 2640 Mortsel (BE)
(72) Inventor: De Broeck, Eric c/o Agfa-Gevaert N.V., 2640 Mortsel (BE); Durt, Peter c/o Agfa-Gevaert N.V., 2640 Mortsel (BE); Vermeylen, Dirk c/o Agfa-Gevaert N.V., 2640 Mortsel (BE); Leonard, Jacques c/o Agfa-Gevaert N.V., 2640 Mortsel (BE); Desie, Guido c/o Agfa-Gevaert N.V., 2640 Mortsel (BE)

(57) **Abstract**

An image preprocessor is disclosed for a DEP device, wherein the image preprocessor corrects digital image data before printing.
The image pre-processor preferably performs at least one the following steps :
1. correcting the image input density according to a first look up table (LUT) for obtaining a desired grey scale value,
2. correcting grey scale values by a second LUT for varying toner fluxes 111 through different printing apertures 107, said second LUT being desirable for adjusting the toner flux 111 to the differing distance of printing apertures 107 belonging to different rows of apertures 107, and for adjusting the toner flux 111 through various printing apertures 107 having varying aperture diameter or shape. This is referred to as a shading correction in a direction orthogonal to the print direction),
3. correcting grey scale value for the grey scale values of neighbouring pixels, that influence the toner flux 111 for forming the actual image pixel, referred to as neighbour compensation,
4. correcting grey scale values for the image density that has been printed through the individual printing aperture 107 prior to the actual printing the required pixel, called previous compensation,
5. correcting grey scale values for the hardware design of the printhead structure 106, i.e. assignment of image pixels to controlling IC number and output channel number per IC,
6. expressing grey scale values as a time modulated or voltage modulated output signal,
7. transferring image output signals in a serial data stream to a FIFO memory from which the output signals are preferably converted to a parallel data stream that is fed to driving IC's, that are used to put a voltage to the individual control electrodes 106a of the printhead structure 106 in the DEP device 100.

## Description

### FIELD OF THE INVENTION

The present invention relates to a process and an image preprocessor and apparatus used in the process of electrostatic printing and more particularly in Direct Electrostatic Printing (DEP). In DEP, electrostatic printing is performed directly from a toner delivery means 101 on a receiving member substrate 109 by means of an electronically addressable printhead structure 106.

### BACKGROUND OF THE INVENTION

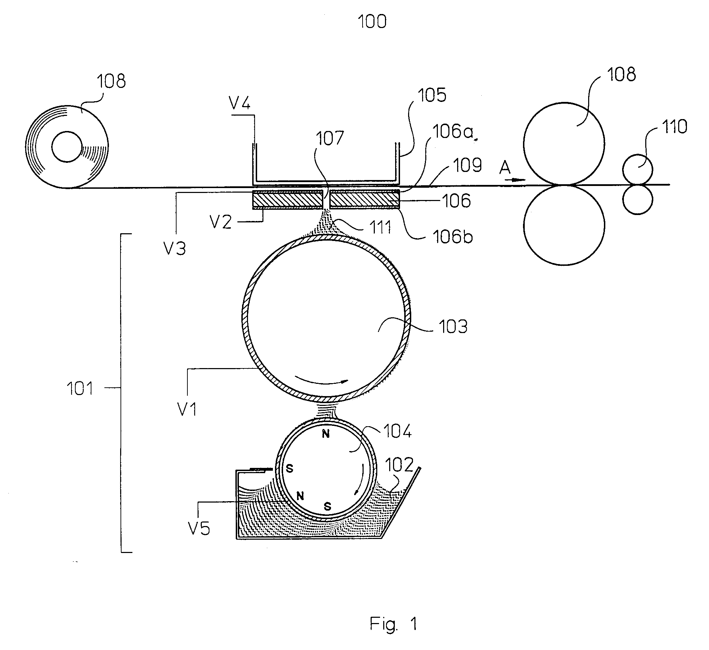

In DEP (Direct Electrostatic Printing) the toner or developing material is deposited directly in an imagewise way on a receiving substrate 109, the latter preferentially not bearing any imagewise latent electrostatic image. We refer to Fig. 1, which is also representative for prior art DEP devices 100. The substrate can be an intermediate endless flexible belt (e.g. aluminium, polyimide etc.). In that case the imagewise deposited toner must be transferred onto another final substrate 109. Preferentially the toner is deposited directly on the final receiving substrate 109, thus offering a possibility to create directly the image on the final receiving substrate 109, e.g. plain paper, transparency, etc. This deposition step is followed by a final fusing step.

This makes the method different from classical electrography, in which a latent electrostatic image on a charge retentive surface is developed by a suitable material to make the latent image visible e.g. by a powder image. Further on, either the powder image is fused directly to said charge retentive surface, which then results in a direct electrographic print, or the powder image is subsequently transferred to the final substrate and then fused to that medium. The latter process results in an indirect electrographic print. The final substrate may be a transparent medium, opaque polymeric film, paper, etc.

DEP is also markedly different from electrophotography in which an additional step and additional member is introduced to create the latent electrostatic image. More specifically, a photoconductor is used and a charging/exposure cycle is necessary.

A DEP device 100 is disclosed in e.g. US-P 3,689,935. This document discloses an electrostatic line printer having a multi-layered particle modulator or printhead structure 106 comprising :
- a layer of insulating material, called isolation layer 106;
- a shield electrode 106b consisting of a continuous layer of conductive material on one side of the isolation layer ;
- a plurality of control electrodes 106a formed by a segmented layer of conductive material on the other side of the isolation layer ; and
- at least one row of apertures 107.
Each control electrode 106a is formed around one aperture 107 and is isolated from each other control electrode 106a.

Selected potentials are applied to each of the control electrodes 106a while a fixed potential is applied to the shield electrode 106b. An overall applied propulsion field between a toner delivery means 101 and a receiving member support projects charged toner particles through a row of apertures 107 of the printhead structure 106. The intensity of the particle stream is modulated according to the pattern of potentials applied to the control electrodes 106a. The modulated stream of charged particles impinges upon a receiving member substrate 109, interposed in the modulated particle stream. The receiving member substrate 109 is transported in a direction orthogonal to the row of apertures 107, to provide a line-by-line scan printing. In a specific embodiment the shield electrode 106b faces the toner delivery means 101 and the control electrode 106a faces the receiving member substrate 109. A DC field may be applied between the printhead structure 106 and a single back electrode 105 on the back side of the receiving member support. This propulsion field is responsible for the attraction of toner to the receiving member substrate 109, that is placed between the printhead structure 106 and the back electrode 105.

A DEP device 100 as described in the above mentioned patent application is well suited to print halftone images and continuous tone images. The perceived density variations in a halftone image can be obtained by on/off modulation of the voltage applied to the individual control electrodes 106a. Continuous tone levels or a high number of different density levels may be obtained by continuous modulation of such voltage. In most DEP systems large apertures 107 are used for obtaining a high degree of density resolution, i.e. for producing an image comprising a high amount of differentiated density levels. For text quality, however, a high spatial resolution is required. This means that small apertures 107 must be made through the plastic material of the printhead structure 106, the control electrodes 106a and the shield electrode 106b.

If many apertures 107 are used in the printhead structure 106 in order to obtain a high spatial and high density resolution, then the overall printing density through each of the individual apertures 107 has to be very constant and reproducible in order to obtain an image with a homogeneous grey-scale without banding in any direction.

Printhead structures with enhanced density and/or spatial control have been described in the literature. In US-P 4,860,036 a printhead structure 106 has been described consisting of at least 3 (preferentially 4 or more) rows of apertures 107, which makes it possible to print images with a smooth page-wide density scale without white banding. The main drawback of this type of printhead structure affects the toner particle application module, which has to be able to provide charged toner particles in the vicinity of all printing apertures 107 with a nearly equal flux 111.

In US-P 5,214,451 the problem of providing charged toner particles in the vicinity of all printing apertures 107 with a nearly equal flux 111, has been tackled by the application of different sets of shield electrodes 106b upon the printhead structure 106, each shield electrode 106b corresponding to a different row of apertures 107. During printing, the voltage - applied to the different shield electrodes 106b corresponding to the different rows of apertures 107 - is changed, so that these apertures 107, that are located at a larger distance from the toner application module, are tuned for a larger electrostatic propulsion field from said toner application module towards said back electrode structure 105, resulting in enhanced density profiles.

In US-P 5,404,155 a correction method has been described for neighbouring channels that influence the toner flux 111 of each other.

The apparatuses described above do solve, to higher or lower extent, the problem of providing charged toner particles in the vicinity of all printing apertures 107 with a nearly equal flux 111 irrespective of the image density at neighbouring pixels, but bring no solution for an optimised density profile in both the print direction and the direction orthogonal to the print direction.

For obtaining better results with constant and reproducible density profiles, more correction means have to be included in a device operating according to the DEP principle.

### OBJECTS OF THE INVENTION

It is therefore a first object of the invention to provide an image preprocessor and an improved Direct Electrostatic Printing (DEP) device, yielding images of excellent grey scale quality.

It is a further object of the invention to provide an image preprocessor and a DEP device combining excellent image quality with a high spatial and density resolution, a high printing speed and a good long term stability and reliability.

It is still a further object of the invention to provide an image preprocessor for a DEP device which optimises the digital image to be printed to the different non-ideal printing characteristics of said DEP device.

Further objects and advantages of the invention will become apparent from the description hereinafter.

### SUMMARY OF THE INVENTION

The above mentioned objects are realised by the specific features according to claim 1. Preferred embodiments of the invention are disclosed in the dependent claims.

These objects are realized by providing an image preprocessor for a DEP device 100, wherein said image preprocessor corrects digital image data preferably by at least one of the following steps :
1. correcting the image input density according to a first look up table (LUT) for obtaining a wanted grey scale value.
2. Correcting a grey scale value by a second LUT for varying toner fluxes 111 through the different printing apertures 107. The second LUT may be necessary for adjusting the toner flux 111 according to the difference in distance of printing apertures 107 belonging to different rows of apertures 107, and for adjusting the toner flux 111 through different printing apertures 107 having a different aperture diameter or shape. This type of correction may be referred to as shading correction in a direction orthogonal to the print direction.
3. Correcting an obtained grey scale value for the grey scale value of neighbouring pixels that influence the toner flux 111 for forming the actual image pixel. This type of correction may be referred to as neighbour compensation.
4. Correcting an obtained grey scale value for the image density that has been printed by the same individual printing aperture 107, but prior to the actual pixel. This type of correction may be referred to as previous compensation.
5. Correcting an obtained grey scale value for the hardware design of the printhead structure 106, the actual assignment of image pixels to controlling IC number and output channel number per IC.
6. Converting a grey scale value to a time modulated or voltage modulated output signal.
These image output signals are preferentially transferred in a serial data stream to a FIFO memory, from which the output signals are converted to a parallel data stream that is fed to driving IC's. These IC's are used to put a voltage to the individual control electrodes 106a of the printhead structure 106 in the DEP device 100.

### DETAILED DESCRIPTION OF THE INVENTION

The invention is described hereinafter by way of examples with reference to the accompanying figures wherein :
- Fig. 1: is a schematic illustration of a possible embodiment of a DEP device according to the present invention.
- Fig. 2: is a schematic illustration of a possible embodiment of an image preprocessor for a DEP device according to the present invention.

While the present invention will hereinafter be described in connection with preferred embodiments thereof, it will be understood that it is not intended to limit the invention to those embodiments. On the contrary, it is intended to cover all alternatives, modifications, and equivalents as may be included within the spirit and scope of the invention as defined by the appending claims.

In the literature many devices have been described that operate according to the principles of DEP (Direct Electrographic Printing). All these devices are able to perform grey scale printing either by voltage modulation or by time modulation of the voltages applied to control electrodes 106a.

It has been described above that it is not an easy task to obtain an excellent grey scale image in a DEP device 100 that has a complex printhead structure 106 with several rows of printing apertures 107 without any correcting means. Since most correcting means drastically affect the cost for manufacturing said devices, it is much more advisable to use components which have the smallest possible negative effect on device complexity and cost.

We have found that excellent grey scale images can be obtained in a DEP printing method if the original image data are corrected in an appropriate way for the imperfections that are introduced into the DEP device as a result of the use of inexpensive and readily available components.

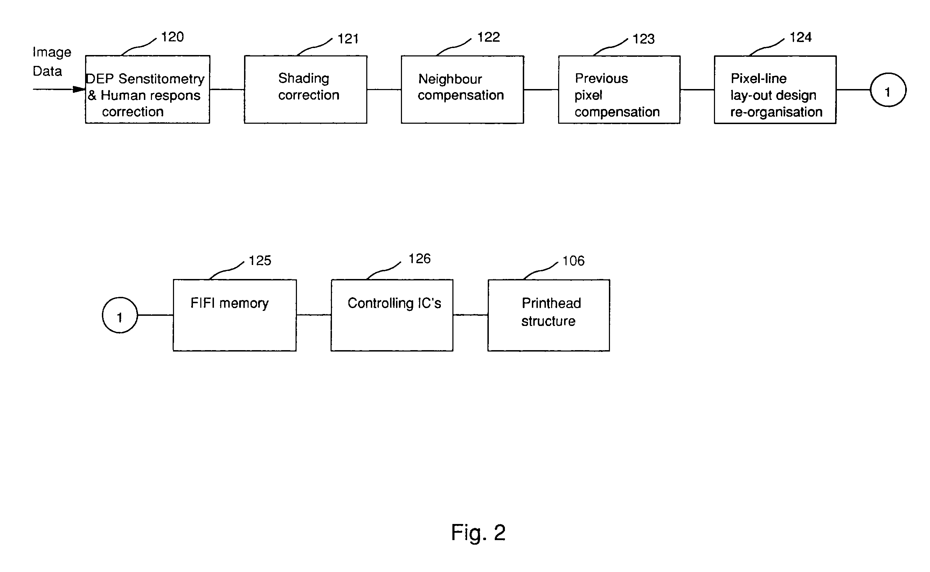

A first correction Fig. 2 (120) that is preferably performed to the raw image data is related to the sensitivity reproduction characteristics of the DEP device and the response of the human eye to these reproduced densities. It is known to those skilled in the art that the human eye perceives a grey scale image with the highest subjective quality if the optical output density range from D_{MAX} to D_{MIN} is not divided in linear intervals but approximates a positive monotonous ascending concave curve, i.e. a curve having a positive first and second derivative, that has generally been known as the Kanamori curve, as described in Acta Radiologica Diagnosis, Vol. 4, 1966, pages 463-476 by Hitoshi Kanamori, titled "Determination of optimum film density range for roentgenograms from visual effects". D_{MIN} is the minimum achievable optical density by the printing system, i.e. by printing no toner on the receiving substrate 109. D_{MAX} is the maximum achievable optical density, i.e. by printing a maximum amount of toner. The first correction is performed by using a look up table (LUT) that converts the linear scale of grey levels (128 levels in our experimental setup) to a Kanamori type of scale.

A second correction 121 takes into account that different printing apertures 107 are not printing with the same optical pixel density. As indicated above, the pixel density is related to the toner flux 111 from the toner delivery means 101 to the receiving substrate 109, and this toner flux 111 is dependent upon the actual distance of the printing aperture 107 to the surface of the toner delivery means 101. For a printhead structure 106 with four rows of printing apertures 107 the correcting value for the rows of printing apertures 107, most distant from the toner delivery means 101, differs from the correction value for the closer rows of printing apertures 107. Moreover, it is not possible to fabricate a printhead structure 106 in which all printing apertures 107 in the same row are yielding a pixel density without any fluctuations. For that reason the pixel density is measured for all printing apertures 107 and then a correction table (second LUT) is constructed that levels the pixel density for all printing apertures 107 so that an homogeneous grey density is obtained over the whole printhead width. This type of correction is referred to as shading correction.

Neighbouring electrical fields, responsible for providing a given pixel density via a neighbouring printing aperture 107, may also influence the toner flux 111 through the actual printing aperture 107 that has to print a pixel with a given pixel density. In order to correct for such neighbouring effects a third correction means 122 may be provided, which may use a correction algorithm or a correction table. This type of correction is referred to as neighbour compensation.

Printing through a given printing aperture 107 removes charged toner particles from the toner mist 111 that is created by the toner delivery means 101. After printing a large area having optical density of D_{MIN}, the toner mist is saturated, resulting in a pixel density which is too high. A fourth correction means 123 may therefore take into account the effect of previous pixel densities and correct the pixel value actually to be printed according to those pixel densities, printed via the same printing aperture 107 but at a previous printing moment, such that also in the printing direction an homogeneous grey density is obtained. In order to correct for these previous effects, a correction algorithm or a correction table may be used for implementing the so-called previous pixel compensation.

A line of bitmap information of a thus corrected image may be re-organized by a fifth correcting means 124 such that a sequential filling of a FIFO memory 125 for driving the printhead structure 106 may be achieved. Since the printing apertures 107 in said printhead structure 106 have control electrodes 106a that belong to different controlling IC's 126 and moreover since geometric considerations in designing the connecting lines to these IC's make that the neighbouring image pixels within one line are not necessarily connected to consecutive output channels of those IC's, this fifth correction means 124 may be needed to obtain a data strobe that can be sent serially to the controlling converters 126 in the printhead structure 106.

A single line of serially oriented pixel values corresponding to final densities on the substrate 109 may then be used to feed a time or voltage modulated electronic controller.

The serial data stream may be fed to the FIFO memory 125, from which the output signals may be converted to a parallel data stream, that is fed to the driving IC's 126, which are used to present a voltage to the individual control electrodes 106a of the printhead structure 106 in the DEP device 100. The sequence of the subsequent corrections as shown in Fig. 2 is a preferred embodiment. Other sequences and/or arrangements with or without specific correction achieve the advantageous effects as described above.

### Description of the DEP device

Referring to Fig. 1, a non limitative example of a device 100 for implementing a DEP method using toner particles according to the present invention comprises :
(i) a toner delivery means 101, comprising a container for developer 102, a charged toner conveyer 103 and a magnetic brush 104, this magnetic brush forming a layer of charged toner particles on said charged toner conveyer 103 ;
(ii) a back electrode 105 ;
(iii) a printhead structure 106, made from a plastic insulating film, coated on both sides with a metallic film. The printhead structure 106 comprises one continuous electrode surface, hereinafter called "shield electrode" 106b. As shown, the shield electrode 106b is facing the toner delivery means 101. The printhead structure 106 further comprises a complex addressable electrode structure, hereinafter called "control electrode" 106a. Each control electrode 106a is arranged around a printing aperture 107. As shown, in the embodiment of Fig. 1, each control electrode 106a is facing the toner-receiving member 109 in the DEP device 100. The printing apertures 107 are arranged in an array structure, for which the total number of rows can be chosen according to the field of application. The location and/or form of the shield electrode 106b and the control electrode 106a can, in other embodiments of a device 100 for a DEP method using toner particles according to the present invention, be different from the location as shown in Fig. 1 ;
(iv) conveyer means 108 to convey a toner receptive member 109 between the printhead structure 106 and the back electrode 105 in the direction indicated by arrow A ;
(v) means for fixing 110 said toner onto said image receptive member 109.

Although in Fig. 1 an embodiment of a DEP device 100, using two electrodes 106a and 106b on a printhead 106, is shown, it is possible to construct a DEP device, suitable for the method according to the present invention, characterised by different constructions of the printhead 106. It is, e.g., possible to implement a DEP method with a device 100 having a printhead 106 comprising only one electrode structure 106a as well as with a device 100 having a printhead 106 comprising more than two electrode structures 106a, 106b, .... The apertures 107 in these printhead structures 106 can have one fixed and constant diameter, or can have a larger entry or exit diameter.
The back electrode 105 of this DEP device 100 can also be made to cooperate with the printhead structure 106, said back electrode 105 being constructed from different styli or wires that are galvanically isolated and connected to one or more voltage sources as disclosed in e.g. US-P 4,568,955 and US-P 4,733,256. The back electrode 105, cooperating with the printhead structure 106, can also comprise one or more flexible PCB's (Printed Circuit Board).

Between the printhead structure 106 and the charged toner conveyer 103 as well as between the control electrode 106a arranged around the apertures 107 and the back electrode 105 behind the toner receiving member 109 as well as on the single electrode surface 106b or between the plural electrode surfaces of said printhead structure 106, different electrical fields may be applied. In a specific embodiment of a DEP device 100 having a geometry according to the present invention, as shown in Fig. 1, voltage V1 is applied to the sleeve of the charged toner conveyer 103, voltage V2 to the shield electrode 106b, voltages V3₀ up to V3ₙ for each individual control electrode 106a. The value for V3_{I} is selected according to the modulation required by the image forming signals, between the values V3ₘᵢₙ and V3ₘₐₓ, on a time basis or grey-level basis. Voltage V4 is applied to the back electrode 105 behind the toner receiving member 109. In other embodiments of the present invention, multiple voltages V2₀ to V2ₙ and/or V4₀ to V4ₙ can be used for individual image pixels or rows. Voltage V5 is applied to the surface of the sleeve of the magnetic brush 104.

A DEP device 100 according to the present invention can be operated successfully when a single magnetic brush 104 is used in contact with the charged toner conveyer 103 to provide a layer of charged toner on said charged toner conveyer 103.

The magnetic brush 104 used in a DEP device 100 according to the present invention is preferentially of the type with stationary core and rotating sleeve.

In a DEP device 100, according to the present invention and using a magnetic brush 104 of the type with stationary core and rotating sleeve, any type of known carrier particles and toner particles can successfully be used. It is however preferred to use "soft" magnetic carrier particles. "Soft" magnetic carrier particles useful in a DEP device 100 according to a preferred embodiment of the present invention are soft ferrite carrier particles. Such soft ferrite particles exhibit only a small amount of remanent magnetic behaviour, characterised in coercivity values ranging from about 50 up to 250 Oe or 4000 to 20000 A/m. Further very useful soft magnetic carrier particles, for use in a DEP device 100 according to a preferred embodiment of the present invention, are composite carrier particles, comprising a resin binder and a mixture of two magnetites having a different particle size as described in EP-B 289 663. The particle size of both magnetites will vary between 0.05 and 3 µm. The carrier particles have preferably an average volume diameter (dᵥ₅₀) between 10 and 300 µm, more preferably between 20 and 100 µm. More detailed descriptions of carrier particles, as mentioned above, can be found in EP 675 417, that is incorporated herein by reference.

It is preferred to use in a DEP device according to the present invention, toner particles with an absolute average charge (|q|) corresponding to 1 fC ≤ |q| ≤ 20 fC, more preferably to 1 fC ≤ |q| ≤ 10 fC. The absolute average charge of the toner particles is measured by an apparatus sold by Dr. R. Epping PES-Laboratorium D-8056 Neufahrn, Germany under the name "q-meter". The q-meter is used to measure the distribution of the charge of toner particles (q in fC) with respect to a measured toner diameter (d in 10 µm). From the absolute average charge per 10 µm (|q|/10µm) the absolute average charge |q| is calculated. Moreover it is preferred that the charge distribution, measured with the apparatus cited above, is narrow, i.e. shows a distribution wherein the coefficient of variability (ν), i.e. the ratio of the standard deviation to the average value, is equal to or lower than 0.33. Preferably the toner particles used in a device according to the present invention have an average volume diameter (dᵥ₅₀) between 1 and 20 µm, more preferably between 3 and 15 µm. More detailed descriptions of toner particles, as mentioned above, can be found in EP 675 417, that is incorporated herein by reference.

A DEP device making use of the above mentioned marking toner particles can be addressed in a way that enables it to give black and white. It can thus be operated in a "binary way", useful for black and white text and graphics and useful for classical bilevel halftoning to render continuous tone images.

A DEP device according to the present invention is especially suited for rendering an image with a plurality of grey levels. Grey level printing can be controlled by either an amplitude modulation of the voltage V3 applied on the control electrode 106a or by a time modulation of V3. By changing the duty cycle of the time modulation at a specific frequency, it is possible to print accurately fine differences in grey levels. It is also possible to control the grey level printing by a combination of an amplitude modulation and a time modulation of the voltage V3, applied on the control electrode 106a.

The combination of a high spatial resolution and of the multiple grey level capabilities typical for DEP, opens the way for multilevel halftoning techniques, such as e.g. described in EP 634 862. This enables the DEP device, according to the present invention, to render high quality images.

### The carrier particles

A macroscopic "soft" ferrite carrier consisting of a MgZn-ferrite with average particle size 50 µm, a magnetisation at saturation of 29 emu/g or 29 Am²/kg was provided with a 1 µm thick acrylic coating. The material showed virtually no remanence.

### The toner particles

The toner used for the experiment had the following composition : 97 parts of a co-polyester resin of fumaric acid and bispropoxylated bisphenol A, having an acid value of 18 and volume resistivity of 5.1 x 10¹⁶ ohm.cm was melt-blended for 30 minutes at 110° C in a laboratory kneader with 3 parts of Cu-phthalocyanine pigment (Colour Index PB 15:3). A resistivity decreasing substance - having the following formula : (CH₃)₃N⁺C₁₆H₃₃ Br⁻ was added in a quantity of 0.5 % with respect to the binder, as described in WO 94/027192. It was found that - by mixing with 5 % of said ammonium salt - the volume resistivity of the applied binder resin was lowered to 5x10¹⁴ Ω.cm. This proves a high resistivity decreasing capacity (reduction factor : 100).

After cooling, the solidified mass was pulverized and milled using an ALPINE Fliessbettgegenstrahlmühle type 100AFG (tradename) and further classified using an ALPINE multiplex zig-zag classifier type 100MZR (tradename). The average particle size was measured by Coulter Counter model Multisizer (tradename) and was found to be 6.3 µm by number and 8.2 µm by volume. In order to improve the flowability of the toner mass, the toner particles were mixed with 0.5 % of hydrophobic colloidal silica particles (BET-value 130 m²/g).

### The developer

An electrostatographic developer was prepared by mixing the above mentioned mixture of toner particles and colloidal silica in a 4 % ratio (w/w) with carrier particles. The triboelectric charging of the toner-carrier mixture was performed by mixing said mixture in a standard tumbling set-up for 10 min. The developer mixture was run in the magnetic brush for 5 minutes, after which the toner was sampled and the tribo-electric properties were measured, according to a method as described in the above mentioned EP 675 417. The average charge, q, of the toner particles was -7.1 fC.

### The printhead structure 106

A printhead structure 106 was made from a polyimide film of 50 µm thickness, single sided coated with a 17 µm thick copper film. On the back side of the printhead structure 106, facing the receiving member substrate 109, a square shaped control electrode 106a was arranged around each square shaped aperture 107. Each of these control electrodes 106a was individually addressable from a high a voltage power supply. The printhead structure 106 had four rows of apertures 107. The apertures 107 had an aperture width of 100 µm. The width of the copper electrodes was 75 µm. The rows of apertures 107 were staggered to obtain an overall resolution of 250 dpi. For the fabrication process of the printhead structure 106, conventional methods of copper etching and excimer laser burning were used, as known to those skilled in the art.

### The toner delivery means 101

The toner delivery means 101 in a preferred embodiment comprised a cylindrical charged toner conveyer 103 with a sleeve made of aluminium with a TEFLON (tradename) coating and a surface roughness of 2.5 µm (Ra-value measured according to ANSI/ASME B46.1-1985) and a diameter of 20 mm. The charged toner conveyer 103 was rotated at a speed of 50 rpm. The charged toner conveyer 103 was connected to an AC power supply with a square wave oscillating field of 600 V at a frequency of 3.0 kHz with 20 V DC-offset.

Charged toner was propelled to this conveyer 103 from a stationary core/rotating sleeve type magnetic brush 104 comprising two mixing rods and one metering roller. One rod was used to transport the developer through the unit, the other one to mix toner with developer.

The magnetic brush 104 was constituted of the so called magnetic roller, which in this case contained, inside the roller assembly, a stationary magnetic core, having three magnetic poles with an open position (no magnetic poles present) to enable used developer to fall off from the magnetic roller. The open position was one quarter of the perimeter and was located at the position opposite to the charged toner conveyer 103.
The sleeve of the magnetic brush 104 had a diameter of 20 mm and was made of stainless steel roughened with a fine grain to assist in transport (Ra=3 µm measured according to ANSI/ASME B46.1-1985) and showed an external magnetic field strength in the zone between said magnetic brush 104 and the charged toner conveyer 103 of 0.045 T, measured at the outer surface of the sleeve of the magnetic brush 104.

A scraper blade was used to force developer to leave the magnetic roller. On the other side, a doctoring blade was used to meter a small amount of developer onto the surface of the magnetic brush 104. The sleeve was rotating at 100 rpm, the internal elements rotating at such a speed as to conform to a good internal transport within the development unit. The magnetic brush 104 was connected to a DC power supply of -200 V.
The reference surface of the charged toner conveyer 103 was placed at a distance of 900 µm from the reference surface of the magnetic brush 104.

### The printing engine

The distance B between the front side of the printhead structure 106 and the sleeve (reference surface) of the charged toner conveyer 103, was set at 350 µm. The distance between the back electrode 105 and the back side of the printhead structure 106 (i.e. control electrodes 106a) was set to 150 µm and the paper travelled at 6.25 mm/sec. To the individual control electrodes 106a an (imagewise) voltage V3 between 0 V and -300 V was applied, on a time modulated basis with 128 levels in a line time of 32 ms. The back electrode 105 was connected to a high voltage power supply of +600 V. To the sleeve of the charged toner conveyer 103 an AC voltage of 600 V at 3.0 kHz was applied, with 20 V DC offset.

### Colour printing engine

A printhead structure was made in the same way as described above. The printing apertures were square shaped with a width of 100 micron and staggered in 2 rows so to obtain a printing resolution of 254 dpi. The through holes were drilled by an excimer laser using the copper electrodes as mask, and further cleaned by a short isotropic plasma etching treatment. 20922 printing apertures yielded a printing width of 210 mm. A similar printhead structure was made for four different applicator modules.

As charged toner applicator module a commercially available non magnetic mono-component unit of an Apple Colour Laserwriter 12/600 PS (i.e. yellow toner cartridge M3758 G/A, magenta toner cartridge M3760 G/A, cyan toner cartridge M3757 G/A, and black toner cartridge M3756 G/A) was used. The doctor blade and toner roller were connected to a high power supply delivering a 3.0 kHz square wave oscillating AC voltage of 300 Vrms and -200 V DC-component.

To the individual control electrodes a time modulated voltage of 0 to -300 V was applied, according to the image density information.

The distance between the surface of toner roller and the surface of the printhead structure bearing on that side the different control electrodes was set to 300 micron. The printhead structure was stretched over 4 roller bars in a frame as described in the European patent application number 94203255 and located in the printing engine in a rigid way so that correct alignment between the four different printhead structures was possible.

The image receiving paper was conducted at a printing speed of 20 mm/s over a back electrode at 500 micron distance from the back side of the printhead structure, said back electrode being connected to a high voltage power supply of 1500 V.

A multi colour image was printed with this device using an image pre-processor as described further on.

### The image preprocessor

A graphics image file (e.g. TIFF file) was converted to a bitmap file with appropriate geometry. In a first example, with a printhead structure 106 having 512 printing apertures 107, a bitmap file with 8-bit grey scale density was used with 512 pixels width, resulting in a 5 cm wide graphics image.
This bitmap file was corrected as described above in a sequential way with the following characteristics:
For the sensitometric correction, a LUT with a concave Kanamori curve was used.
For the shading correction, a first printout without any correction was used to measure by a micro-densitometer the individual pixel densities at maximum printing density. A correction was applied for the density deviations that were measured and again a (corrected) image of full density was printed and measured again until a homogeneous image density was obtained in a direction orthogonal to the printing direction. The thus obtained data were put in a second LUT.
For the neighbouring correction, an algorithm was used so that the density value for a certain pixel was corrected by 5% for the density value for its direct neighbouring pixel.
For the previous compensation, an algorithm was used so that the density value for a certain pixel at a certain printing time was corrected for 7% by the density value of the same printing aperture 107 at the first previous line time and 2% at the second previous line time.
For the layout design correction a LUT was used that takes into account how the individual pixels are connected towards the number of IC and output channel in this IC used.
Time modulation for this grey scale printing was used. For that reason. Each time a single line of corrected pixels values (values from 0 to 127) was to be printed, this line was 128 times duplicated, resulting in 128 sub-lines. Each sub-line had the same pixel values as the original single line. Each sub-line got a sub-line index from 1 to 128. The sub-lines were transmitted to the marking engine. Each pixel within the sub-line, having a value larger than the sub-line index, results in an ON-value or a signal pulse on the corresponding aperture to transmit toner particles through the aperture. All pixel values smaller than the sub-line index got an OFF for the given pixel.

The bitmap file obtained in this way was serially clocked into the FIFO 125 of the printer controller from which a serial to parallel converter was used to put the output voltage (V3 = -300 or 0 V) on the individual control electrodes 106a.

An equivalent image pre-processor was used for each printhead structure with 20,922 printing apertures, of the colour printing engine using non-magnetic mono-component applicators as described above.

Having described in detail preferred embodiments of the current invention, it will now be apparent to those skilled in the art that numerous modifications can be made therein without departing from the scope of the invention as defined in the following claims.

## Claims

1. A direct electrostatic printing device, for rendering an image represented by image signals, comprising :
- a toner delivery means (101) ;
- a receiving member substrate (109) ;
- an electronically addressable printhead structure (106) comprising a plurality of apertures (107) for transmission of toner from said toner delivery means (101) to said receiving member substrate (109),
- at least one control electrode (106a) for each aperture (107) for controlling the transmission of toner through said aperture (107) by a driving signal ;
is characterised in that said printing device further comprises an image pre-processor for correcting said image signals prior to transforming them to driving signals.

2. Printing device according to claim 1, wherein said image pre-processor comprises means for correcting image signals by sensitometric characteristics of the printing device.

3. Printing device according any of claims 1 or 2, wherein said image pre-processor comprises means for correcting image signals by a convex transformation curve, preferentially according to Kanamori.

4. Printing device according any of claims 1 to 3, wherein said image pre-processor comprises means for correcting image signals by a correction table based on non-uniformity of apertures (107) and their respective distance with respect to the toner delivery means (101).

5. Printing device according any of claims 1 to 4, wherein said image pre-processor comprises means for correcting image signals by a fraction of the pixel value of neighbouring pixels, in a direction substantially perpendicular to the relative movement of said receiving member substrate (109) with respect to said printhead structure (106).

6. Printing device according any of claims 1 to 5, wherein said image pre-processor comprises means for correcting image signals by a fraction of the pixel value of neighbouring pixels, in a direction substantially parallel to the relative movement of said receiving member substrate (109) with respect to said printhead structure (106).

7. Printing device according any of claims 1 to 6, wherein said image pre-processor comprises means for re-arranging image signals according to electronic components for driving said printhead structure (106).

8. Printing device according any of claims 1 to 7, wherein said image pre-processor comprises means for transforming image signals to a time modulated or voltage modulated output signal for application to said control electrode (106a).
